# EUROPÄISCHE PATENTANMELDUNG

(11) **EP 2 374 964 A1**
(43) Veröffentlichungstag der Anmeldung: **12.10.2011**
(21) Anmeldenummer: 10003813.2
(22) Anmeldetag: 09.04.2010
(51) Int. Cl.: E04H 4/10, F16B 5/06, E04F 10/06, E06B 9/46

(54) **Strebe für eine Schwimmbadabdeckung**

(71) Anmelder: Bieri Alpha Covers AG, 6022 Grosswangen (CH)
(72) Erfinder: Blaser, Torsten, 6052 Hergiswil (CH)
(74) Vertreter: Lemcke, Brommer & Partner

(57) **Zusammenfassung**

Eine Strebe (1) für die Abdeckung einer Öffnung oder Vertiefung mit einer Abdeckplane (25, 26), insbesondere einer textilen Kunststofffolie, insbesondere für eine Schwimmbadabdeckung, wobei die Strebe (1) zum Tragen der Abdeckplane (25, 26) insbesondere über dem Wasser gefüllten Bereich (27) eines Schwimmbeckens vorgesehen ist, wobei die Strebe (1) als mehrteiliges Profilelement mit wenigstens einem ersten Profileinzelteil (2) und mit wenigstens einem zweiten Profileinzelteil (3) ausgebildet ist, und wobei das zweite Profileinzelteil (3) wenigstens einen elastisch verformbaren Abschnitt aufweist, mit dem es im zusammengefügten Zustand des Profilelements zumindest teilweise in das erste Profileinzelteil (2) eingreift und darin gehalten ist, um eine Klemmvorrichtung zum Klemmen der Abdeckplane (25, 26) bilden, zeichnet sich aus durch wenigstens ein im zusammengefügten Zustand des Profilelements in das Profilelement eingebrachtes deformationsfestes Versteifungselement (100), welches zumindest mit dem verformbaren Abschnitt des zweiten Profileinzelteils mechanisch versteifend zusammenwirkt.

## Beschreibung

Die vorliegende Erfindung betrifft eine Strebe nach dem Oberbegriff des Patentanspruchs 1 für die Abdeckung einer Öffnung oder Vertiefung, insbesondere für eine Schwimmbadabdeckung mit einer Abdeckplane, insbesondere einer textilen Kunststofffolie, nach Art einer Sicherheitsabdeckung, wobei die Strebe zum Tragen der Abdeckplane über der Öffnung oder Vertiefung und insbesondere über dem Wasser gefüllten Bereich eines Schwimmbeckens vorgesehen ist, wobei die Strebe als mehrteiliges Profilelement mit wenigstens einem ersten Profileinzelteil und mit wenigstens einem zweiten Profileinzelteil ausgebildet ist, und wobei das zweite Profileinzelteil wenigstens einen elastisch verformbaren Abschnitt aufweist, mit dem es im zusammengefügten Zustand des Profilelements zumindest teilweise in das erste Profileinzelteil eingreift und darin gehalten ist, um eine Klemmvorrichtung zum Klemmen der Abdeckplane bilden.

Weiterhin betrifft die vorliegende Erfindung eine Abdeckung nach dem Oberbegriff des Patentanspruchs 14, insbesondere eine Schwimmbadabdeckung, mit einer Abdeckplane nach Art einer Sicherheitsabdeckung.

Abdeckungen, insbesondere Schwimmbadabdeckungen der eingangs genannten Art, und entsprechende Streben hierfür sind bekannt. Derartige Abdeckungen werden allgemein als "Sicherheitsabdeckung" und speziell nach dem Sprachgebrauch der Anmelderin auch als "Rollschutz" bezeichnet, da die Abdeckplane, die beispielsweise zum Abdecken des Wasser gefüllten Bereichs eines Schwimmbads vorgesehen ist, zusammen mit den sie tragenden (Quer-)Streben eingerollt wird, wenn das Schwimmbad benutzt wird und dementsprechend nicht abgedeckt ist.

Aus der EP 0 465 430 B1 ist eine gattungsgemäße Schwimmbadabdeckung bekannt, bei der die Streben in Kedersäume einer textilverstärkten Kunststofffolie eingesteckt sind. Hierbei ist als nachteilig anzusehen, dass das Herstellen der genannten Kedersäume relativ aufwändig und somit kostenintensiv ist. Außerdem werden derartige Kedersäume regelmäßig durch Aufschweißen von Kunststofffolienmaterial auf die eigentliche Schwimmbadabdeckung erzeugt, so dass weiterhin auch hinsichtlich der verwendbaren Kunststoffmaterialien Beschränkungen bestehen.

Eine erforderliche Verspannbarkeit der Schwimmbadabdeckung gemäß EP 0 465 430 B1 wird dadurch erreicht, dass die Längsränder der Schwimmbadabdeckung verstärkt ausgeführt und zu diesem Zweck insbesondere umgeschlagen und verschweißt sind. Zum Verspannen werden Spanngurte in Ösen an der Abdeckung selbst eingehängt und entsprechend angezogen. Auch in diesem Zusammenhang ist als nachteilig anzusehen, dass die genannte Verstärkung der Randbereiche der Abdeckung relativ aufwändig und kostenintensiv ist, wobei die erforderliche Verschweißbarkeit des Materials wiederum Einschränkungen bei der Materialwahl nach sich zieht.

Auch beim Gegenstand der CH 675 445 A5 sind Tragstäbe für eine Schwimmbadabdeckfolie in Taschen der Abdeckfolie eingesteckt, deren Herstellung aufwändig und entsprechend kostenintensiv ist.

Aus der DE 693 11 940 T2 ist dagegen eine Abdeckvorrichtung für ein Becken, insbesondere für ein Schwimmbad bekannt, bei der Teile der Abdeckfolie so genannte Querlieken umfassen, wie sie beispielsweise von Schiffsegeln bekannt sind, wobei die genannten Lieken in entsprechende Ausnehmungen der Querstreben angebracht werden, um auf diese Weise eine durchgängige Abdeckung aus Querstreben und Abdeckfolienteilen zu erzeugen. Auch hierbei ist als nachteilig anzusehen, dass das Ausbilden der genannten Lieken mit einem erhöhten fertigungstechnischen Aufwand verbunden ist. Entsprechend aufwändig gestaltet sich auch die Reparatur beschädigter Abdeckfolienteile, insbesondere im Falle einer Beschädigung der Lieken, welche aufwändig ausgebessert oder vollständig ersetzt werden müssen, um die vorgeschlagene Beckenabdeckung weiterhin nutzen zu können.

Aus einer älteren europäischen Patentanmeldung der gegenwärtigen Anmelderin mit der Veröffentlichungsnummer EP 2 116 671 A1 ist eine Strebe für eine Schwimmbadabdeckung bekannt, bei der zwei Profileinzelteile zum Klemmen einer Abdeckplane rastend ineinander greifen. Dabei ist das eine Profileinzelteil, um es mit dem anderen Profileinzelteil zusammenfügen zu können, zumindest abschnittsweise elastisch verformbar ausgebildet. Es hat sich jedoch unter dynamischer Verformung und/oder Verwindung der Strebe gezeigt, dass dann aufgrund der genannten elastischen Deformierbarkeit kein sicherer Zusammenhalt der Profileinzelteile mehr gewährleistet ist, was sich negativ auf die erreichbare Klemmung der Abdeckplane auswirkt.

Aus der WO 2004/009933 A1 ist eine Strebe für eine Schwimmbadabdeckung bekannt, bei der ebenfalls über ineinander gefügte Profileinzelteile eine Klemmung einer Abdeckplane erreicht wird. Allerdings halten auch die dort gezeigten Ausgestaltungen einer dynamischen Verformung mit entsprechender Verwindung der Strebe nicht Stand.

Der Erfindung liegt die Aufgabe zugrunde, eine Strebe für eine Abdeckung einer Öffnung oder Vertiefung mit einer Abdeckplane, insbesondere einer textilen Kunststofffolie, sowie eine mit Hilfe solcher Streben gebildete Abdeckung anzugeben, welche die oben genannten Nachteile des Standes der Technik vermeidet und dabei insbesondere einfacher und kostengünstiger herstellbar ist, wobei in diesem Zusammenhang insbesondere möglichst keine Beschränkungen bei der Wahl von für die Abdeckplane zu verwendenden Materialien bestehen soll.

Außerdem soll die zuschaffende Strebe auch dynamischen Verformungen und entsprechenden Verwindungen standhalten, wie sie beispielsweise dann entstehen, wenn eine große Last, wie eine Person oder dergleichen, auf eine von einer derartigen Strebe gehaltene Abdeckplane fällt.

Die Erfindung löst diese Aufgabe mittels einer Strebe für die Abdeckung einer Öffnung oder Vertiefung mit den Merkmalen des Patentanspruchs 1 sowie mittels einer Abdeckung mit den Merkmalen des Patentanspruchs 14.

Vorteilhafte Weiterbildungen der Erfindung sind jeweils Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist eine Strebe für die Abdeckung einer Öffnung oder Vertiefung mit einer Abdeckplane, insbesondere einer textilen Kunststofffolie, insbesondere für eine Schwimmbadabdeckung, wobei die Strebe zum Tragen der Abdeckplane insbesondere über dem Wasser gefüllten Bereich eines Schwimmbeckens vorgesehen ist, wobei die Strebe als mehrteiliges Profilelement mit wenigstens einem ersten Profileinzelteil und mit wenigstens einem zweiten Profileinzelteil ausgebildet ist, und wobei das zweite Profileinzelteil wenigstens einen elastisch verformbaren Abschnitt aufweist, mit dem es im zusammengefügten Zustand des Profilelements zumindest teilweise in das erste Profileinzelteil eingreift und darin gehalten ist, um eine Klemmvorrichtung zum Klemmen der Abdeckplane bilden, gekennzeichnet durch wenigstens ein im zusammengefügten Zustand des Profilelements in das Profilelement eingebrachtes deformationsfestes Versteifungselement, welches zumindest mit dem verformbaren Abschnitt des zweiten Profileinzelteils mechanisch versteifend zusammenwirkt.

Entsprechend ist eine erfindungsgemäße Abdeckung mit einer Abdeckplane, insbesondere einer textilen Kunststofffolie, gekennzeichnet durch wenigstens eine erfindungsgemäße Strebe, wobei die Strebe zum Tragen der Abdeckplane über einer Öffnung oder Vertiefung und insbesondere über dem Wasser gefüllten Bereich eines Schwimmbeckens vorgesehen ist.

Ein erster Grundgedanke der vorliegenden Erfindung ist demnach darin zu sehen, dass zum Verbinden der Streben mit der Abdeckplane einer Abdeckung im Wesentlichen keine (kosten-)aufwändigen Veränderungen an der Abdeckplane erforderlich sind, wie das bei der Ausbildung der nach dem Stand der Technik vorgesehenen Taschen oder Lieken regelmäßig der Fall war. Vorliegend erfolgt die Verbindung zwischen den Streben und der Abdeckplane in einfacher Weise durch Klemmen der Abdeckplane zwischen den Einzelteilen eines mehrteiligen Profilelements, welches die erfindungsgemäße Strebe bildet.

Dadurch, dass erfindungsgemäß im zusammengefügten Zustand des Profilelements weiterhin ein deformationsfestes Versteifungselement in das Profilelement eingebracht wird, welches zumindest mit dem verformbaren Abschnitt des zweiten Profileinzelteils mechanisch versteifend zusammenwirkt, ist sichergestellt, dass es auch bei starker dynamischer Belastung der Strebe nicht zu einer derartigen Verwindung des Profilelements kommt, die den sicheren Zusammenhalt des Profilelements gefährden könnte.

Durch das deformationsfeste Versteifungselement wird gewissermaßen die für das Zusammenfügen der Profileinzelteile erforderliche elastische Verformbarkeit des genannten Abschnitts des zweiten Profileinzelteils aufgehoben oder blockiert, so dass das zweite Profileinzelteil in dem genannten Bereich im Wesentlichen nur noch starre und keine federnden Eigenschaften mehr aufweist. Erst durch diese nachträgliche starre Arretierung ist die erforderliche Sicherheitsfunktion der vorgeschlagenen Strebe erreichbar, was beim Stand der Technik insbesondere gemäß EP 2 116 671 A1 oder WO 2004/00993311 nicht gegeben war.

Das Versteifungselement wird vorteilhafter Weise im zusammengefügten Zustand der Profileinzelteile seitlich in das Profilelement eingeschoben. Dabei kann das Versteifungselement einstückig ausgebildet sein und eine im Wesentlichen der Längserstreckung des Profilelements entsprechende Länge aufweisen. Alternativ ist jedoch auch die mehrteilige und/oder gegenüber dem Profilelement verkürzte Ausbildung des Versteifungselements möglich.

Erfindungsgemäß lassen sich die Ränder von Abdeckplanenteilen einfach zwischen die genannten Einzelteile des mehrteiligen Streben-Profilelements einlegen, welche anschließend zusammengefügt werden und die genannten Abdeckplanenteile zwischen sich einklemmen. Eine wie auch immer geartete Randbearbeitung der Abdeckplanenteile ist dabei grundsätzlich nicht erforderlich, was die Herstellungskosten reduziert und darüber hinaus quasi beliebige Planenmaterialien zur Herstellung der Abdeckung nutzbar macht.

Zu Reparaturzwecken lassen sich die geklemmten Abdeckplanenteile grundsätzlich nach Öffnen des Profilelements aus diesem entnehmen und in einfacher Weise ersetzen, wobei sogar möglich ist, nur einen beschädigten Bereich des jeweiligen Abdeckplanenteils abzuschneiden und dieses anschließend wieder zwischen den Einzelteilen des Profilelements einzuklemmen.

Das erfindungsgemäße Streben-Profilelement ist bezogen auf die Profileinzelteile vorzugsweise derart ausgebildet, dass bei deren Zusammenfügen eine hinreichend starke Federwirkung erzeugt wird, die verhindert, dass eine geklemmte Abdeckplane aus dem Profilelement ohne weiteres herausgezogen werden kann. Dabei wird vorteilhafter Weise bereits mindestens eine Zugfestigkeit von etwa 4 kg/10 cm garantiert, was der Gewichtskraft einer Person von mehr als 100 kg entspricht. Dieser Effekt wird durch das eingesetzte Versteifungselement in Bezug auf hohe dynamische Belastungen wesentlich verstärkt.

Wegen des eingesetzten deformationsfesten Versteifungselements kann das erfindungsgemäße Streben-Profilelement nämlich auch weitaus höhere dynamische Belastungen sicher aufnehmen. Dabei ist hier und im folgenden mit dem Begriff "deformationsfest" jeweils eine solche Deformationsfestigkeit gemeint, welche die typischerweise an Abdeckplanen und Streben, beispielsweise für Schwimmbäder, auftretenden dynamischen Belastungen sicher auszuhalten vermag, ohne dass es zu der unerwünschten Verwindung der Profilelemente kommt. Geeignete Materialien für das vorzugsweise massiv ausgestaltete deformationsfeste Versteifungselement sind in diesem Zusammenhang insbesondere Hartkunststoffe, wie Hart-PVC, Polyamid (PA), Polyurethan (PU) oder dergleichen, sowie Metalle, wie Aluminium, oder Metalllegierungen.

Eine erste Weiterbildung der erfindungsgemäßen Strebe sieht vor, dass das zweite Profileinzelteil wenigstens zwei beim Zusammenfügen relativ zueinander bewegliche und vorzugsweise im Wesentlichen parallele Vorsprünge aufweist, mit denen es im zusammengefügten Zustand in das erste Profileinzelteil eingreift, wobei zwischen den Vorsprüngen ein Freiraum verbleibt, in den das Versteifungselement einbringbar oder eingebracht ist. Die zueinander beweglichen Vorsprünge stellen eine mögliche Ausgestaltung des elastisch verformbaren Abschnitts des zweiten Profileinzelteils dar.

Im Zuge einer anderen Weiterbildung der erfindungsgemäßen Strebe kann vorgesehen sein, dass diese an wenigstens einem der Vorsprünge des zweiten Profileinzelteils eine vorzugsweise rechtwinklig vorspringende Struktur aufweist, welche sich in den Freiraum zwischen den Vorsprüngen hinein erstreckt. Auf diese Weise wird der genannte Freiraum in wenigstens einen ersten Teilfreiraum und wenigstens einen zweiten Teilfreiraum unterteilt. Der gleiche Effekt wird auch durch eine Querschnittsänderung (z. B. Verengung) des Freiraums erreicht. Eine wieder andere Weiterbildung der erfindungsgemäßen Strebe kann dann vorsehen, dass zumindest der erste Teilfreiraum im Bereich des verformbaren Abschnitts des zweiten Profileinzelteils angeordnet ist und das vorzugsweise das deformationsfeste Versteifungselement nur in den ersten Teilfreiraum eingebracht wird, um auf diese Weise eine für das Versteifungselement erforderliche Materialmenge zu begrenzen. Die Anmelderin hat nämlich erkannt, dass es in der Praxis ausreichend ist, wenn das deformationsfeste Versteifungselement ausschließlich in dem bzw. an dem am stärksten elastisch verformbaren Abschnitt des zweiten Profileinzelteils angeordnet ist.

Eine äußerst bevorzugte andere Weiterbildung der erfindungsgemäßen Strebe sieht vor, dass das deformationsfeste Versteifungselement eine im Wesentlichen dem Querschnitt des Freiraums, vorzugsweise des ersten Teilfreiraums, entsprechenden und vorzugsweise mehreckigen Querschnitt aufweist. Mit anderen Worten: Das deformationsfeste Versteifungselement ist dann entsprechend in dem (Teil-)Freiraum zwischen den Vorsprüngen des zweiten Profileinzelteils im Wesentlichen formschlüssig aufgenommen. Höchst vorzugsweise weist das deformationsfeste Versteifungselement in diesem Zusammenhang einen massiven Querschnitt auf, wie bereits erwähnt, wodurch eine maximale Deformationfestigkeit gegeben ist.

Eine andere Weiterbildung der erfindungsgemäßen Strebe sieht vor, dass zum Klemmen der Abdeckplane das erste Profileinzelteil und das zweite Profileinzelteil miteinander verrastet werden, wozu eines der genannten Profileinzelteile wenigstens eine Rastausnehmung und das andere Profileinzelteil zumindest einen entsprechenden Rastvorsprung aufweist. In diesem Zusammenhang können das erste und das zweite Profileinzelteil komplementäre Raststrukturen aufweisen und sind im zusammengefügten Zustand über diese Raststrukturen miteinander verrastet. Eine wieder andere Weiterbildung der erfindungsgemäßen Strebe sieht vor, dass durch das deformationsfeste Versteifungselement eine dauerhafte Verbindung der Profileinzelteile, insbesondere eine dauerhafte Verrastung der genannten Raststrukturen, auch unter dynamischer Verformung und/oder Verwindung des Profilelements bewirkt und sichergestellt ist.

Um die weiter oben erwähnte Austauschbarkeit von Abdeckplanenteilen zu erreichen, sieht eine andere Weiterbildung der erfindungsgemäßen Strebe vor, dass das erste Profileinzelteil und das zweite Profileinzelteil zum Entnehmen der Abdeckplane insbesondere im Wesentlichen zerstörungsfrei voneinander trennbar sind.

Aus ästhetischen Gründen sowie zum Zwecke einer besseren Rollbarkeit sieht eine andere Weiterbildung der erfindungsgemäßen Strebe vor, dass eines der Profileinzelteile eine abgerundete, im Querschnitt insbesondere teilkreisförmige Außenkontur aufweist. Dagegen kann das andere Profilteil bezogen auf das genannte abgerundete Profilteil eine relativ ebene Außenkontur aufweisen.

Wie oben erwähnt, erfolgt die aus Sicherheitsgründen notwendige Verspannung einer Schwimmbadabdeckung nach einem vorbekannten Stand der Technik an der Abdeckplane selbst, wozu diese in entsprechend aufwändiger Weise verstärkt ausgebildet ist. Dagegen sieht eine andere bevorzugte Weiterbildung der erfindungsgemäßen Strebe vor, dass das erste Profileinzelteil und/oder das zweite Profileinzelteil wenigstens eine Nut aufweist, die längs der Erstreckung des jeweiligen Profileinzelteils ausgebildet ist und in die sich Nutensteine mit einer Ösenstruktur zum Einhaken von Spanngurten einbringen lassen. Auf diese Weise erfolgt die Verspannung der (Schwimmbad-)Abdeckung direkt an deren Streben, so dass auch in den Randbereichen der Abdeckplane keine aufwändige und kostenintensive Ausbildung von Verstärkungsstrukturen erforderlich ist.

Vorzugsweise sind die genannten Nuten jeweils am Rand der Außenkontur des abgerundeten Profileinzelteils angeordnet.

Vorteilhafterweise weisen das erste Profileinzelteil und das zweite Profileinzelteil an ihren Fügeflächen, das heißt denjenigen Flächen, die im zusammengefügten Zustand des Profilelements einander zugewandt sind, komplementäre Strukturen auf, die zum Klemmen der Abdeckplane dienen. Vorzugsweise besitzen die genannten komplementären Strukturen über den Querschnitt der Strebe eine Mehrzahl von winkelmäßigen Änderungen ihrer jeweiligen Verlaufsrichtung. Auf diese Weise wird eine so genannte Verschlingung der Abdeckplane im Bereich der Fügeflächen bewirkt, was die erreichbare Klemmwirkung deutlich verbessert.

Die genannten komplementären Strukturen umfassen beispielsweise wenigstens eine Längsausnehmung mit insbesondere dreieckförmigem oder kegelstumpfförmigem Querschnitt an dem ersten oder zweiten Profileinzelteil und einen entsprechend komplementären Längsvorsprung an dem anderen Profileinzelteil.

Um die durch Klemmung erreichbaren Haltekräfte noch weiter zu steigern, sieht eine andere bevorzugte Weiterbildung der erfindungsgemäßen Strebe vor, dass das erste Profileinzelteil und/oder das zweite Profileinzelteil an der Fügefläche zumindest abschnittsweise eine Rändelung aufweist bzw. aufweisen.

Das erste Profileinzelteil und/oder das zweite Profileinzelteil können an wenigstens einem Ende als Profilhohlteil ausgebildet sein, wobei ein Endstück zum insbesondere gemeinsamen Verschließen der Profileinzelteile an dem entsprechenden Ende vorgesehen ist. Das Verschließen kann insbesondere durch Einstecken des genannten Endstücks in das Profileinzelteil bzw. in die Profileinzelteile erfolgen, insbesondere durch Einstecken in die weiter oben genannte Nut.

Um Abnutzungen der Strebe bei Bewegungen über den Rand der abzudeckenden Öffnung oder Vertiefung, z.B. über den Beckenrand eines Schwimmbeckens zu vermeiden, sieht eine andere Weiterbildung der erfindungsgemäßen Strebe vor, dass eines der Profileinzelteile an seiner Außenfläche bezogen auf den zusammengefügten Zustand der Strebe wenigstens eine Befestigungsstruktur aufweist, an der ein Randauflageteil der Abdeckung befestigbar ist. Bei der genannten Befestigungsstruktur kann es sich insbesondere um eine hinterschnittene Längsausnehmung handeln.

Das weiter oben genannte Endstück, welches zum Verschließen des Profileinzelteils bzw. der Profileinzelteile in dieselben eingesteckt wird, kann im Zuge einer anderen Weiterbildung der Erfindung eine Struktur aufweisen, die zum Verbinden mit einer Antriebseinheit für die Abdeckung dient, insbesondere eine Kantwellenstruktur.

Im Zuge einer anderen Weiterbildung der vorliegenden Erfindung kann auch vorgesehen sein, dass nicht die Strebe selbst auf dem genannten Rand aufliegt, sondern dass das in die Strebe eingesetzte Endstück eine Auflagefläche zum Auflegen auf einen Rand der Öffnung oder Vertiefung aufweist. Während die Streben selbst vorzugsweise in Aluminium oder einem vergleichbaren Werkstoff ausgebildet sind, kann das Endstück oder das weiter oben genannte Randauflageteil beispielsweise in Kunststoff ausgebildet sein, so dass es im Falle einer Beschädigung durch Reibung auf dem Rand leicht und ohne größeren Kostenaufwand ersetzbar ist.

Eine Weiterbildung der erfindungsgemäßen Abdeckung zeichnet sich durch eine im Wesentlichen regelmäßige Abfolge von Abdeckplanenbahnen oder -teilen und erfindungsgemäßen Streben aus, wobei die Breite der Abdeckplanenbahnen insbesondere ca. 1,3 m beträgt, wobei gegebenenfalls am Rand der Abdeckung Bahnen mit abweichender Breite verwendet werden können.

Eine derartige Ausgestaltung ist insbesondere deshalb besonders vorteilhaft, weil das verwendete Abdeckplanenmaterial am Markt typischerweise nur in bestimmten Breiten verfügbar ist, so dass durch die beschriebene regelmäßige Abfolge von Abdeckplanenbahnen und Streben, an denen das Abdeckplanenmaterial erfindungsgemäß - wie beschrieben - klemmend gehalten ist, lediglich ein Zuschneiden des Abdeckplanenmaterials auf die gewünschte (Becken-)Breite erforderlich ist. Mit anderen Worten, im Zuge der beschriebenen Weiterbildung der vorliegenden Erfindung werden zum Abdecken der Öffnung oder Vertiefung eben so viele erfindungsgemäße Streben verwendet, dass sich bei Verwendung von Abdeckplanenbahnen mit Standardbreite gerade eine im Wesentlichen vollständige Abdeckung der Öffnung oder Vertiefung ergibt. Lediglich im Randbereich wird es dann erforderlich sein, eine Abdeckplanenbahn mit abweichender, in der Regel geringerer Breite vorzusehen.

Die vorstehend beschriebene neuartige Abdeckung stellt somit eine günstige Alternative zu bestehenden Modellen dar und lässt sich aus den genannten Gründen ohne spezielle Fabrikationsmaschinen, wie Hochfrequenz- oder Heißluftmaschinen, herstellen. Die Herstellung wird somit in vorteilhafter Weise von einem bestimmten Fabrikationsstandort im Wesentlichen unabhängig.

Durch die beschriebene Austauschbarkeit von Abdeckplanenbahnen ergibt sich eine einfache Reparierbarkeit der vorgeschlagenen Abdeckung.

Da die Abspannung - wie beschrieben - nur noch an den Streben selbst erfolgt, ist keine kostenintensive Ausbildung von Kedern längs am Rollschutz mehr erforderlich.

Insgesamt wird die Fertigung des erfindungsgemäßen Rollschutzes von der Stoffqualität und dem verwendeten Werkstoff grundsätzlich unabhängig.

Durch das erfindungsgemäße Klemmen der Abdeckplanenbahnen muss das entsprechende Material nur noch auf die korrekte Länge zugeschnitten werden; ein Schweißen von Taschen, Kedern oder dergleichen ist nicht mehr erforderlich.

Durch die beschriebene Abspannung der Abdeckung an den Streben selbst müssen vorteilhafter Weise an der Abdeckplane keine Abspannungen angeschweißt werden. Wenn zudem die Befestigungsstrukturen für die Abspannung aufgrund der genannten Nutensteine längs der Streben verschiebbar; ergibt sich auch hinsichtlich der Abspannpositionen am Rand der Öffnung oder Vertiefung eine größtmögliche Flexibilität ergibt.

Durch das beschriebene Vorsehen eines Auflageschutzes an den Streben lässt sich deren Lebensdauer quasi nach Belieben verlängern.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: eine Querschnittsansicht einer im Wesentlichen erfindungsgemäßen Strebe speziell für eine Schwimmbadabdeckung im getrennten Zustand ihrer Einzelteile und noch ohne eingesetztes Versteifungselement;
- Figur 2: die Strebe aus Figur 1 im zusammengefügten Zustand ihrer Einzelteile mit geklemmter Abdeckplane und mit eingesetztem Versteifungselement;
- Figur 3: eine alternative Ausgestaltung der erfindungsgemäßen Strebe im zusammengefügten Zustand mit geklemmter Abdeckplane und mit eingesetztem Versteifungselement;
- Figur 4: eine zusammengefügte, erfindungsgemäße Strebe mit Endstücken, Randauflage und geklemmten Abdeckplanenbahnen;
- Figur 5: eine zusammengefügte, erfindungsgemäße Strebe im Wesentlichen gemäß Figur 4 mit Befestigungsmitteln für eine Spannvorrichtung; und
- Figur 6: eine Teilansicht eines Endbereichs einer erfindungsgemäßen Strebe mit zugehörigem Endstück.

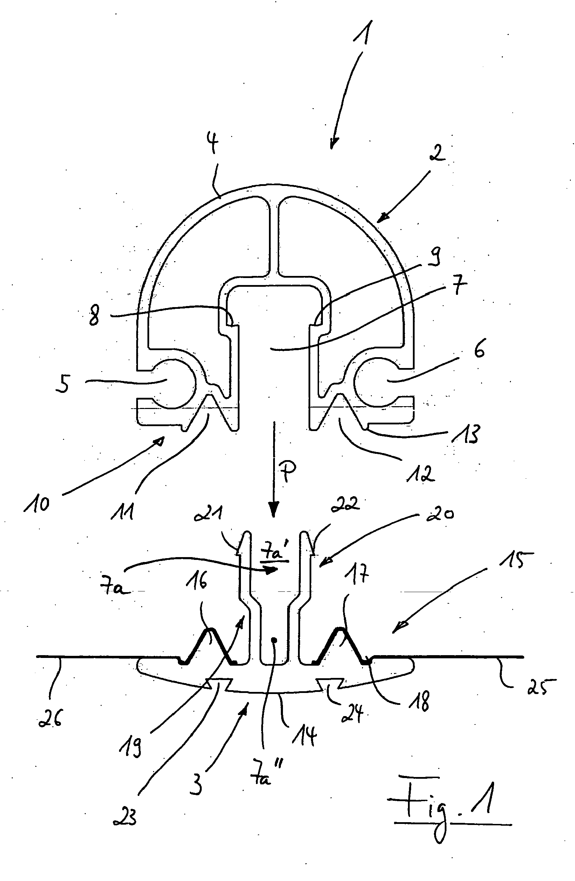

Figur 1 zeigt einen Querschnitt durch eine erfindungsgemäße Strebe für eine Schwimmbadabdeckung, wobei die Strebe in ihrer Gesamtheit mit dem Bezugszeichen 1 bezeichnet und darüber hinaus nicht auf die vorliegend rein exemplarisch genannte Verwendung zur Abdeckung eines Schwimmbeckens beschränkt ist, sondern zur Abdeckung quasi beliebiger Öffnungen und Vertiefungen einsetzbar ist.

Die Strebe 1 ist als mehrteiliges Profilelement ausgebildet und besteht gemäß der gezeigten Ausführungsform aus zwei Profileinzelteilen 2, 3, die vorliegend ohne Beschränkung der Allgemeinheit auch als erstes Profileinzelteil 2 bzw. zweites Profileinzelteil 3 bezeichnet werden.

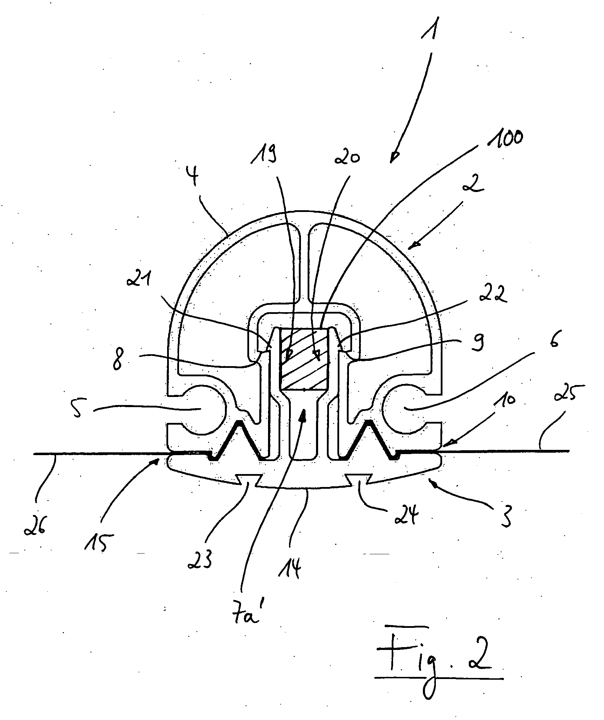

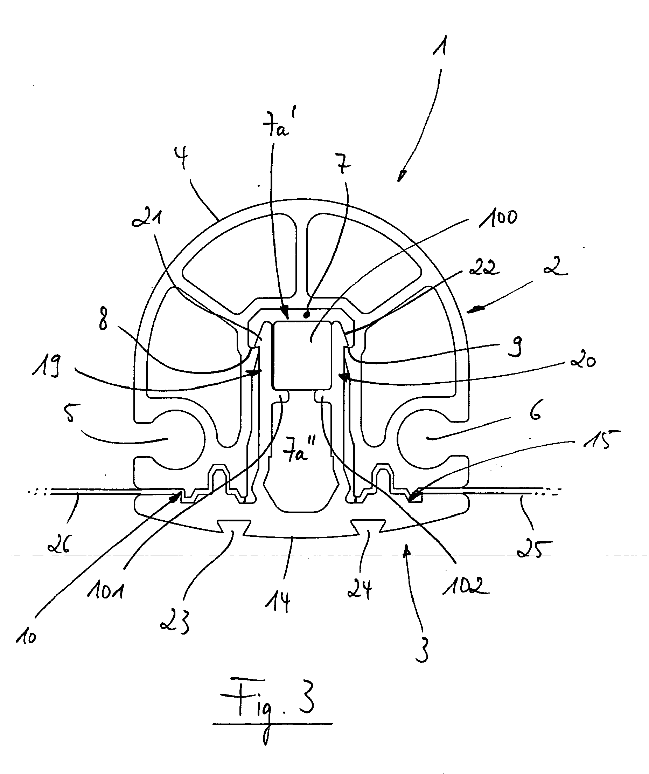

In der Darstellung gemäß Figur 1 sind die Profileinzelteile 2, 3 im getrennten Zustand gezeigt. Dagegen zeigt die Abbildung gemäß Figur 2 die erfindungsgemäße Strebe 1 aus Figur 1, wobei sich die Profileinzelteile 2, 3 in ihrem zusammengefügten Zustand befinden. Auch Figur 3 zeigt eine zusammengefügte erfindungsgemäße Strebe. Hierauf wird weiter unten noch genauer eingegangen.

Das erste Profileinzelteil 2 ist als Hohlprofilteil ausgebildet und weist an seiner Oberseite eine im Querschnitt in etwa halbkreisförmige Außenkontur 4 auf, an die sich auf beiden Seiten eine seitlich nach außen öffnende Ausnehmung oder Nut 5 bzw. 6 nach Art einer Kederschiene anschließt. Weiterhin weist das erste Profileinzelteil 2 eine zentrale Ausnehmung 7 auf, deren Querschnitt nach innen hin seitlich verbreitert ist, so dass Absätze 8, 9 resultieren, auf deren Funktion weiter unten noch genauer eingegangen wird.

Die Nuten 5, 6 weisen gemäß dem gezeigten Ausführungsbeispiel und ohne Beschränkung der Allgemeinheit einen im Wesentlichen kreisförmigen Querschnitt auf.

An seiner Unterseite, das heißt der abgerundeten Außenkontur 4 gegenüberliegend weist das erste Profileinzelteil 2 eine strukturierte Fügefläche 10 auf, auf deren Ausgestaltung und Funktion nachfolgend noch genauer eingegangen wird.

Links und rechts der zentralen Ausnehmung 7 sind an der Fügefläche 10 Längsausnehmungen 11, 12 mit im Wesentlichen dreieckförmigem Querschnitt ausgebildet, wobei Kanten der Längsausnehmungen 11, 12, von denen in Figur 1 nur eine 13 explizit bezeichnet ist, gegenüber einer gedachten Ebene der Fügefläche 10 hervorspringen.

Verglichen mit dem ersten Profileinzelteil 2 ist das zweite Profileinzelteil 3 zunächst relativ eben bzw. mit einer nur leichten Krümmung seiner Außenkontur 14 ausgebildet.

Das zweite Profileinzelteil 3 ist zum formschlüssigen Zusammenwirken mit dem ersten Profileinzelteil 2 ausgebildet und weist demnach an seiner dem ersten Profilteil 2 zugewandten Fügefläche 15 Längsvorsprünge 16, 17 auf, welche zu den Längsausnehmungen 11, 12 des ersten Profileinzelteils 2 komplementär ausgebildet sind. Seitlich der Längsvorsprünge 16, 17 finden sich Rückspringende Bereiche des zweiten Profileinzelteils 3, von denen in Figur 1 nur einer 18 explizit bezeichnet ist, welche zu den genannten Überständen 13 an der Fügefläche 10 des ersten Profileinzelteils 2 komplementär ausgebildet sind.

Weiterhin weist das zweite Profileinzelteil 3 zwei sich im Wesentlichen parallel zueinander erstreckende Rastvorsprünge 19, 20 auf, die an ihrem freien Ende jeweils eine Rastnase 21 bzw. 22 aufweisen, die beim Zusammenfügen der Profileinzelteile 2, 3 in an sich bekannter Weise mit dem bereits erwähnten Absätzen 8, 9 der zentralen Ausnehmung 7 des ersten Profileinzelteils 2 zusammenwirken, um die beiden Profileinzelteile 2, 3 miteinander zu verrasten. Zu diesem Zweck wird das erste Profileinzelteil 2 in Richtung des Pfeils P auf das zweite Profileinzelteil 3 aufgedrückt, worauf weiter unten anhand der Figur 2 noch genauer eingegangen wird.

Die Rastvorsprünge 19, 20 des zweiten Profileinzelteils 3 bilden einen elastisch deformierbaren Abschnitt des zweiten Profileinzelteils 3, mit welchem dieses in die zentrale Ausnehmung 7 des ersten Profileinzelteils 2 eingreift. Die genannte elastische Verformbarkeit oder Deformierbarkeit ist notwendig, um das Eingreifen zu ermöglichen und um die Verrastung der beiden Profileinzelteile 2, 3 zu bewirken, wie der Fachmann ohne weiteres erkennt.

Die vorstehend beschriebenen Rastvorsprünge sind demnach beim Zusammenfügen des Profilelements 1 aus den beiden Profileinzelteilen 2, 3 relativ zueinander beweglich und gemäß der Ausgestaltung in Figur 1 im Wesentlichen parallel ausgebildet. Dabei verbleibt zwischen den Rastvorsprüngen 19, 20 ein Freiraum, der nachfolgend zur Abgrenzung gegenüber der zentralen Ausnehmung 7 des ersten Profileinzelteils 2 insgesamt mit dem Bezugszeichen 7a bezeichnet ist. Vorliegend nimmt der Freiraum 7a von den freien Enden der Rastvorsprünge 19, 20 hin zur Basis des zweiten Profileinzelteils 3 in seiner lichten Breite ab. Allerdings ist die vorliegende Erfindung nicht auf eine derartige Ausgestaltung des Freiraums 7a beschränkt, wie insbesondere weiter unter anhand von Figur 3 noch deutlich wird. In den Freiraum 7a wird anschließend, das heißt nach erfolgtem Zusammenfügen der Profileinzelteile 2, 3 ein deformationsfestes Versteifungselement eingebracht, welches in Figur 1 nicht zeichnerisch dargestellt ist. Die genannte lichte Breite des Freiraums 7a nimmt gemäß der Darstellung in Figur 1 nicht kontinuierlich von oben nach unten ab, sondern verringert sich im mittlerem Bereich der Rastvorsprünge 19, 20 stufenartig, so dass breitenmäßig getrennte obere und untere bzw. erste und zweite (Teil-)Freiräume 7a' bzw. 7a" geschaffen sind, worauf weiter unten noch genauer eingegangen wird.

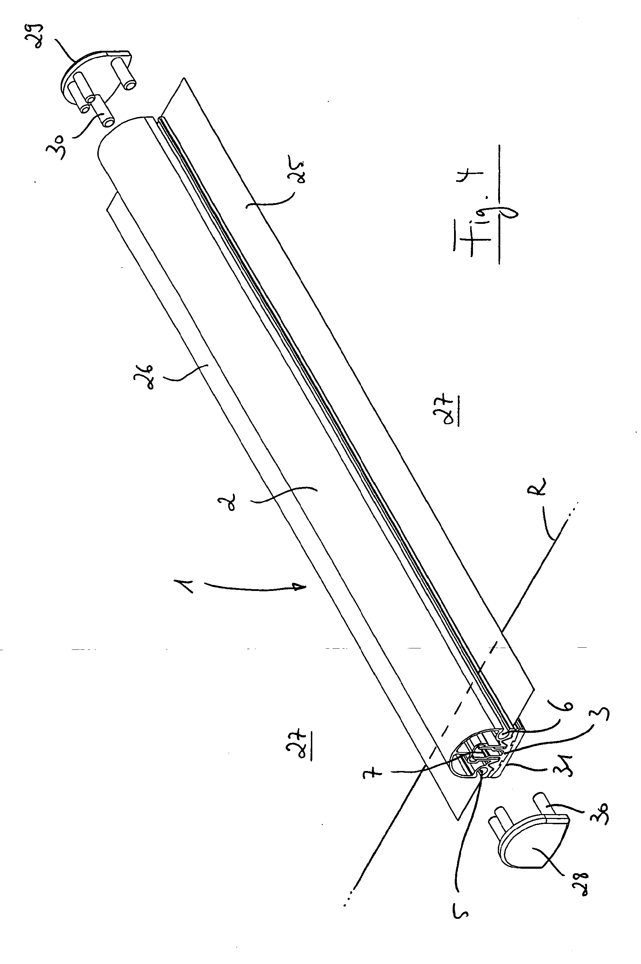

Das zweite Profileinzelteil 3 weist an seiner den Längsvorsprüngen 16, 17 und den Rastvorsprüngen 19, 20 abgewandten Unterseite im Bereich der Außenkontur 14 schwalbenschwanzartig hinterschnittene Ausnehmungen 23, 24 auf, auf deren Funktion weiter unten anhand von Figur 4 noch genauer eingegangen wird.

Weiterhin sind in Figur 1 bei Bezugszeichen 25 und 26 jeweils noch Bahnen einer Schwimmbadabdeckplane dargestellt, welche zum Herstellen einer vollständigen Schwimmbadabdeckung an der Strebe 1 klemmend gehalten werden sollen. Zu diesem Zweck werden die genannten Abdeckbahnen 25, 26 im Bereich der Längsvorsprünge 16, 17 des zweiten Profileinzelteils 3 in den gemäß Figur 1 verbleibenden Zwischenraum zwischen dem ersten Profileinzelteil 2 und dem unteren Profileinzelteil 3 eingebracht. Anschließend werden die Profileinzelteile 2, 3 miteinander verrastet, wie beschrieben, und es ergibt sich die in Figur 2 exemplarisch dargestellte Konfiguration.

In Figur 2 sind aus Gründen der Übersichtlichkeit nicht alle vorstehend anhand der Figur 1 beschriebenen Einzelmerkmale der Strebe 1 explizit bezeichnet, wobei ansonsten gleiche Bezugszeichen gleiche oder gleichwirkende Elemente angeben.

Wie der Figur 2 zu entnehmen ist, greifen im zusammengefügten Zustand des ersten Profileinzelteils 2 und des zweiten Profileinzelteils 3 die Rastnasen 21, 22 der Rastvorsprünge 19 bzw. 20 hinter die Absätze 8, 9 in der zentralen Ausnehmung 7, so dass die beiden Profileinzelteile 2, 3 sicher miteinander verrastet sind. Dabei greifen die Profileinzelteile 2, 3 an ihren jeweiligen Fügeflächen 10 bzw. 15 mit den in Figur 2 aus Gründen der Übersichtlichkeit nicht näher bezeichneten Vorsprüngen und Ausnehmungen 11, 12, 13, 16, 17, 18 (vgl. Figur 1) formschlüssig ineinander, so dass die Abdeckplanenbahnen 25, 26 klemmend zwischen den Profileinzelteilen 2, 3 gehalten sind, ohne dass zu diesem Zweck die entsprechenden Ränder der Bahnen 25, 26 in irgendeiner Weise vorzubereiten wären.

Weiterhin ist in Figur 2 bei Bezugszeichen 100 ein deformationsfestes Versteifungselement 100 dargestellt, welches den oberen Teil-Freiraum 7a' zwischen den Rastvorsprüngen 19, 20 im Wesentlichen vollständig formschlüssig ausfüllt. Das Versteifungselement 100 ist in einem geeigneten deformationsfesten Material, wie Hart-PVC, PA, PU, einem anderen geeigneten Kunststoff oder auch in Metall, beispielsweise Aluminium, ausgebildet und dient dazu zu verhindern, dass sich die Rastvorsprünge 19, 20 bei starker dynamischer Belastung des Profilelements elastisch nach innen bewegen, wodurch die Klemmung der Abdeckbahnen 25, 26 nicht länger gewährleistet wäre.

Das Versteifungselement 100 wird nach dem Zusammenfügen der Profileinzelteile 2, 3 seitlich in den Freiraum 7 bzw. den Freiraum 7a' eingeschoben. Wie der Fachmann erkennt, ist die Formgebung des Versteifungselements 100 nicht auf die Ausgestaltung gemäß Figur 2 beschränkt. Es kann einteilig oder mehrteilig ausgebildet sein und kann sich über die gesamte Länge der Strebe 1' erstrecken, was aber - je nach gewünschter Versteifung - nicht zwingend erforderlich ist. Insbesondere kann auch vorgesehen sein, dass das Versteifungselement 100 im Querschnitt den gesamten Freiraum 7a einschließlich der Freiräume 7a' und 7a" vollständig ausfüllt, was jedoch aus Stabilitätsgründen nicht zwingend erforderlich ist. Vorliegend sorgt die Breitenverringerung des Freiraums 7a' dafür, dass das Versteifungselement 100 sicher bei dem am stärksten verformbaren Abschnitt zwischen den freien Enden der Rastvorsprünge 19, 20 verbleibt und somit sicher für die erforderliche Steifigkeit des Profilelements 1 auch bei dynamischer Belastung sorgt.

Zu den bereits angesprochenen Vorsprüngen und Ausnehmungen 11, 12, 13, 16, 17, 18 gemäß Figur 1 ist noch anzumerken, dass diese vorzugsweise zumindest im Bereich des oberen Profileinzelteils 2 zusätzlich noch mit einer zeichnerisch nicht weiter dargestellten Rändelung versehen sein können, um einem Faltenwurf bei der Klemmung der Bahnen 25, 26 vorzubeugen und die Klemmwirkung noch weiter zu verbessern.

Es kann weiterhin vorgesehen sein, die beiden Profileinzelteile 2, 3 derart auszubilden bzw. ein entsprechendes Werkzeug (nicht gezeigt) vorzusehen, dass die Verrastung aufgehoben und die beiden Profileinzelteile 2, 3 wieder voneinander getrennt werden können, beispielsweise um die Stoffbahnen 25, 26 bei Beschädigung austauschen zu können. Beispielsweise kann zu diesem Zweck mit einem geeigneten Werkzeug gemäß der Darstellung in Figur 1 oder Figur 2 senkrecht zur Blattebene in die zentrale Ausnehmung eingegriffen werden, um die Rastvorsprünge 19, 20 aufeinander zu zudrücken und anschließend das erste Profileinzelteil 2 von dem zweiten Profileinzelteil 3 abzuziehen.

Wie der Fachmann erkennt, ist die Erfindung jedoch keinesfalls auf die vorstehend exemplarisch beschriebenen Ausgestaltungen insbesondere der Fügeflächen 10, 15, des Rastmechanismus und/oder der Außenkonturen 4, 14 beschränkt.

Figur 3 zeigt eine weitere Ausgestaltung der erfindungsgemäßen Strebe, wiederum mit geklemmten Abdeckplanenbahnen 25, 26 und eingesetztem Versteifungselement 100, wobei vorliegend nur auf wesentlichen Unterschiede gegenüber der Ausgestaltung in Figur 2 näher eingegangen wird.

Ein Unterschied gegenüber der Darstellung in Figur 2 besteht darin, dass an den Innenseiten der Rastvorsprünge 19, 20 zur Abgrenzung der Freiräume 7a', 7a" stegartige Vorsprünge 101 bzw. 102 vorgesehen sind, welche sich bezogen auf die Rastvorsprünge 19, 20 auf gleicher Höhe befinden und aufeinander zuweisen, so dass eine Auflage für das in den oberen Teilfreiraum 7a' eingesetzte Versteifungselement 100 geschaffen ist. Das Versteifungselement 100 ist weitgehend formschlüssig zwischen den Rastvorsprüngen 19, 20 und dem stegartigen Vorsprüngen 101, 102 gehalten und sorgt aufgrund seiner Deformationsfestigkeit dafür, dass sich der Abstand zwischen den Rastvorsprüngen 19, 20 auch bei dynamischer Belastung der Strebe 1 nicht wesentlich verringern kann, so dass eine dauerhafte Verrastung der Profileinzelteile 2, 3 sichergestellt ist. Die Klemmung der Abdeckplanenbahnen 25, 26 ist entsprechend auch bei hoher dynamischer Belastung der Strebe 1 sichergestellt.

Weiterhin ist der Figur 3 noch zu entnehmen, dass die angesprochenen Fügeflächen 10, 15 des ersten bzw. zweiten Profileinzelteils 2, 3 entlang ihres jeweiligen komplementären Verlaufs über den Querschnitt der Strebe 1 eine Vielzahl von Abbiegungen oder winkelmäßige Verlaufsänderungen aufweisen, wodurch sich eine sehr effiziente Verschlingung der Abdeckplanenbahnen 25, 26 ergibt, was den Klemm- bzw. Halteeffekt noch verstärkt. Auch beim Gegenstand der Figur 3 ist vorzugsweise zumindest die Fügefläche 10 des oberen Profileinzelteils 2 bereichsweise oder vollflächig mit einer Rändelung versehen, um die Haltekraft weiter zu verbessern.

In den nachfolgend erläuterten Figuren 4 bis 6 wurde aus Gründen der Übersichtlichkeit auf eine explizite Darstellung des Versteifungselements 100 jeweils verzichtet. Ein solches lässt sich analog zur Darstellung in Figuren 2 und 3 ohne weiteres in den vorhandenen Freiraum innerhalb der Strebe einbringen, wie weiter oben ausführlich besprochen. Wie der Fachmann erkennt, entsprechen die Profileinzelteile gemäß den Figuren 4 bis 6 im wesentlichen den Profileinzelteilen aus den Figuren 1 und 2, ohne das die vorliegende Erfindung jedoch hierauf beschränkt wäre. Wie der Fachmann ohne weiteres erkennt, können auch die Profileinzelteile gemäß Figur 3 im Zuge der Ausgestaltungen gemäß den Figuren 4 bis 6 zum Einsatz kommen.

Figur 4 zeigt anhand einer perspektivischen Gesamtdarstellung nochmals eine Ausgestaltung der erfindungsgemäßen Strebe 1 mit erstem 2 und zweitem Profileinzelteil 3, wobei zwischen letzteren wiederum Abdeckplanenbahnen 25, 26 klemmend gehalten sind. Im Randbereich der Strebe 1 ist mittels einer gestrichelten Linie R der Rand eines abzudeckenden Schwimmbeckens angedeutet, wobei entsprechend der wassergefüllte, abzudeckende Bereich des Schwimmbeckens symbolisch mit dem Bezugszeichen 27 bezeichnet ist.

Bezugszeichen 28, 29 bezeichnen Endstücke oder Endkappen zum Verschließen der Strebe 1 an ihren offenen Enden. Entsprechend weisen die Endkappen 28, 29 eine flächige Formgebung auf, die geometrisch im Wesentlichen der gemeinsamen Außenkontur 4, 14 des ersten 2 und zweiten Profileinzelteils 3 entspricht (vgl. Figuren 1 bis 3). Die Endkappen 28, 29 weisen angeformte Stifte 30 auf, die zum Halten der Endkappen 28, 29 an der Strebe 1 in die Profileinzelteile 2, 3 eingreifen. Dies geschieht vorzugsweise im Bereich der Nuten 5, 6 sowie in dem Bereich zwischen der Außenkontur 4 des ersten Profileinzelteils 2 und einer die zentrale Ausnehmung 7 der definierenden, nicht näher bezeichneten Innenstruktur des ersten Profileinzelteils 2 (vgl. Figuren 1 bis 3).

Um die Strebe 1 gegen Beschädigung durch Reibung auf dem Beckenrand R zu schützen, ist gemäß Figur 4 im Endbereich der Strebe 1 unterhalb des zweiten Profileinzelteils 3 ein plattenförmiges Randauflageteil 31 angeordnet, welches mit entsprechend geformten Vorsprüngen, die in Figur 4 nicht zu erkennen sind, in die Ausnehmungen 23, 24 gemäß den Figuren 1 bis 3 eingreift. Dazu wird das Randauflageteil 31 vom Ende der Strebe 1 her mit den genannten Vorsprüngen in die Ausnehmungen 23, 24 eingeschoben. Das Randauflageteil 31 besteht zweckmäßigerweise aus einem relativ weichen Material, vorzugsweise Kunststoff, und kann bei Bedarf bzw. Abnutzung leicht ausgetauscht werden.

Die Abdeckplanenbahnen 25, 26 können grundsätzlich jede gewünschte Abmessung senkrecht zur Erstreckung der Strebe 1 aufweisen. Zweckmäßigerweise wird man für die genannte Breite jedoch eine fertigungstechnische Normbreite, beispielsweise 1,3 m, wählen und entsprechend etwa alle 1,3 m eine erfindungsgemäße Strebe 1 vorsehen. Nur am Anfang und/oder Ende der Abdeckung wird dann eine an das Becken angepasste, schmalere Bahn benötigt. Ein wie auch immer geartetes Verbinden von Bahnen, sei es durch Verschweißen, Vernähen oder dergleichen, ist auf diese Weise nicht erforderlich und vereinfacht die Herstellung und Handhabung der so geschaffenen Schwimmbadabdeckung enorm.

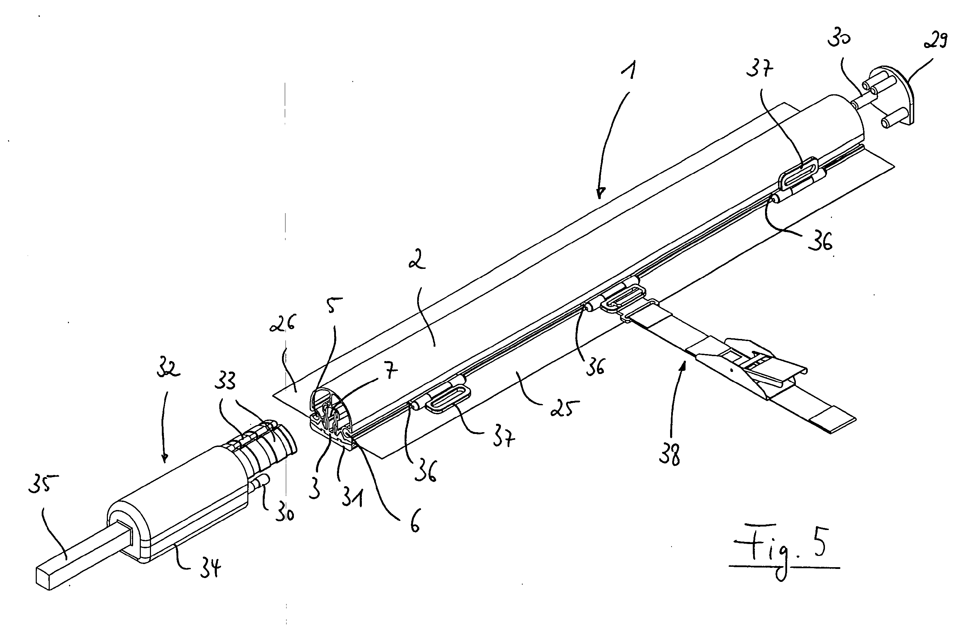

Figur 5 zeigt ebenfalls anhand einer perspektivischen Gesamtansicht eine weitere Ausgestaltung der erfindungsgemäßen Strebe 1, die wiederum zum klemmenden Halten zweier Abdeckplanenbahnen 25, 26 aus einem ersten Profileinzelteil 2 und einem zweiten Profileinzelteil 3 zusammengesetzt ist, wie weiter oben detailliert beschrieben.

An ihrem einen Ende weist die Strebe 1 eine identische Endkappe 29 wie in Figur 4 auf. Die Endkappe bzw. das Endstück 32 am anderen Ende der Strebe 1 ist jedoch abweichend von der Ausgestaltung in Figur 4 ausgebildet, worauf nachfolgend genauer eingegangen wird.

Das Endstück 32 greift wiederum mit angeformten Stiften oder Zapfen 30 in die Nuten 5, 6 des ersten Profileinzelteils 2 ein. Darüber hinaus weist das Endstück 32 weitere angeformte Einsteckmittel 33 zum Einstecken in das erste Profileinzelteil 2 auf, deren Formgebung zumindest teilweise komplementär zu den Innenabmessungen des - wie gesagt - als Hohlprofil ausgebildeten ersten Profileinzelteils 2 ausgebildet sind. An die genannten Strukturen 30, 33 schließt sich der eigentliche Endstückkörper 34 an, welcher außerhalb der Strebe 1 bzw. des ersten Profileinzelteils 2 verbleibt und der vorzugsweise in Kunststoff mit eingegossener Vierkantwelle 35 ausgebildet ist, wobei letztere zum Verbinden mit einer (motorbetriebenen oder manuellen) Aufrollvorrichtung für die Schwimmbadabdeckung dient.

Bei der Ausführungsform gemäß Figur 5 sind in die Nut 6 Nutensteine 36 mit flacher, schwenkbarer Ösenstruktur 37 eingesetzt, wobei die Ösenstruktur 37 zum Einhaken einer Spannvorrichtung 38 für die Schwimmbadabdeckung dient.

Das Verspannen der so geschaffenen Schwimmbadabdeckung erfolgt somit ausschließlich über die Streben 1, so dass ein Einarbeiten von Spanngurten oder dergleichen in die Abdeckplane selbst nicht erforderlich ist. Darüber hinaus kann vorteilhafterweise an quasi beliebigen Stellen der Strebe 1 die Verspannung erfolgen.

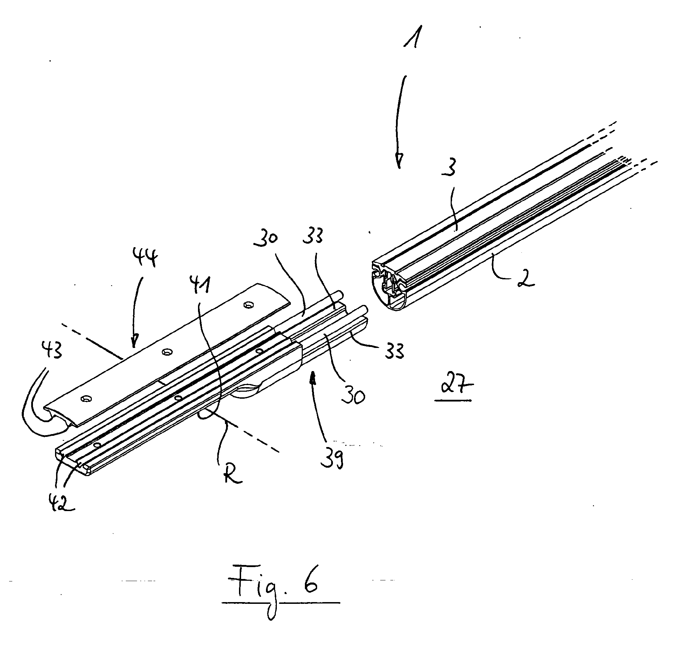

Figur 6 zeigt einen Endabschnitt einer erfindungsgemäßen Strebe 1 mit erstem 2 und zweitem Profileinzelteil 3, wobei vorliegend aus Gründen der Übersichtlichkeit keine Abdeckplanenbahnen zwischen den Profileinzelteilen 2, 3 eingeklemmt sind.

Gemäß der Darstellung in Figur 6 eignet sich die Strebe 1 auch für eine gegenüber der Darstellung in den Figuren 4 und 5 umgedrehte Verwendung, das heißt mit nach unten, zum Beckeninnern 27 hin gedrehtem ersten Profileinzelteil 2.

Zu diesem Zweck ist ein besonders ausgebildetes Endstück 39 vorgesehen, welches mit Strukturen 30, 33 analog zu dem Endstück 32 gemäß Figur 5 in die Strebe 1 eingreift. Zum freien Ende 40 des Endstücks 39 hin nimmt dessen Dicke ab, so dass eine Auflagefläche 41 für das Endstück 39 auf dem wiederum gestrichelt angedeuteten Beckenrand R geschaffen ist. Auf der Oberseite des Endstücks 39 sind in diesem Bereich wiederum Längsausnehmungen 42 vorgesehen, wie mit entsprechenden Vorsprüngen 43 eines im Wesentlichen plattenförmigen Abdeckteils 44 zusammenwirken, um das Abdeckteil 44 mit dem Endstück 39 zu verbinden.

Aus optisch-ästhetischen Gründen weist das Abdeckteil 44 an seiner Oberseite eine etwa der Außenkontur des zweiten Profileinzelteils 3 entsprechende Krümmung auf, wie der Figur 6 andeutungsweise zu entnehmen ist.

Gemäß der Ausgestaltung in Figur 6 steht die Strebe 1 nur wenig über die Abdeckplanenebene hervor, was einen ansprechenden optischen Gesamteindruck für die geschaffene Schwimmbadabdeckung ergibt.

## Patentansprüche

**1.** Strebe (1) für die Abdeckung einer Öffnung oder Vertiefung mit einer Abdeckplane (25, 26), insbesondere einer textilen Kunststofffolie, insbesondere für eine Schwimmbadabdeckung, wobei die Strebe (1) zum Tragen der Abdeckplane (25, 26) insbesondere über dem Wasser gefüllten Bereich (27) eines Schwimmbeckens vorgesehen ist, wobei die Strebe (1) als mehrteiliges Profilelement mit wenigstens einem ersten Profileinzelteil (2) und mit wenigstens einem zweiten Profileinzelteil (3) ausgebildet ist, und wobei das zweite Profileinzelteil (3) wenigstens einen elastisch verformbaren Abschnitt aufweist, mit dem es im zusammengefügten Zustand des Profilelements zumindest teilweise in das erste Profileinzelteil (2) eingreift und darin gehalten ist, um eine Klemmvorrichtung zum Klemmen der Abdeckplane (25, 26) bilden, **gekennzeichnet durch** wenigstens ein im zusammengefügten Zustand des Profilelements in das Profilelement eingebrachtes deformationsfestes Versteifungselement (100), welches zumindest mit dem verformbaren Abschnitt des zweiten Profileinzelteils mechanisch versteifend zusammenwirkt.

**2.** Strebe (1) nach Anspruch 1, **dadurch gekennzeichnet, dass** das zweite Profileinzelteil (3) wenigstens zwei beim Zusammenfügen relativ zueinander bewegliche und vorzugsweise im Wesentlichen parallele Vorsprünge (19, 20) aufweist, mit denen es im zusammengefügten Zustand in das erste Profileinzelteil (2) eingreift, wobei zwischen den Vorsprüngen ein Freiraum (7a) verbleibt, in den das Versteifungselement (100) einbringbar ist.

**3.** Strebe (1) nach Anspruch 2, **dadurch gekennzeichnet, dass** an wenigstens einem der Vorsprünge (19, 20) eine vorzugsweise rechtwinklig vorspringende Struktur (101, 102) angeordnet ist, die sich in den Freiraum (7a) hinein erstreckt und diesen in wenigstens einen ersten Teilfreiraum (7a') und wenigstens einen zweiten Teilfreiraum (7a") unterteilt.

**4.** Strebe (1) nach Anspruch 3, **dadurch gekennzeichnet, dass** zumindest der erste Teilfreiraum (7a') im Bereich des verformbaren Abschnitts des zweiten Profileinzelteils (3) angeordnet ist und dass vorzugsweise das deformationsfeste Versteifungselement (100) nur in den ersten Teilfreiraum eingebracht ist.

**5.** Strebe (1) nach mindestens einem der Ansprüche 2 bis 4, **dadurch gekennzeichnet, dass** das deformationsfeste Versteifungselement (100) eine im Wesentlichen einem Querschnitt des Freiraums (7a), vorzugsweise des ersten Teilfreifreiraums (7a'), entsprechenden, vorzugsweise mehreckigen und höchst vorzugsweise massiven Querschnitt aufweist.

**6.** Strebe (1) nach mindestens einem der Ansprüche 1 bis 5, **dadurch gekennzeichnet, dass** das erste (2) und das zweite Profileinzelteil (3) komplementäre Raststrukturen (8, 9; 21, 22) aufweisen und zum Klemmen der Abdeckplane (25, 26) im zusammengefügten Zustand über die Raststrukturen miteinander verrastet sind.

**7.** Strebe (1) nach mindestens einem der Ansprüche 1 bis 6, **dadurch gekennzeichnet, dass** durch das deformationsfeste Versteifungselement (100) eine dauerhafte Verbindung der Profileinzelteile (2, 3), insbesondere eine dauerhafte Verrastung der Raststrukturen (8, 9; 21, 22) gemäß Anspruch 6, auch unter dynamischer Verformung und/oder Verwindung des Profilelements bewirkt ist.

**8.** Strebe (1) nach mindestens einem der Ansprüche 1 bis 7, **dadurch gekennzeichnet, dass** das deformationsfeste Versteifungselement (100) in einem Hartkunststoff, vorzugsweise Hart-PVC, PA, PU oder dergleichen, oder in Metall ausgebildet ist, vorzugsweise Aluminium.

**9.** Strebe (1) nach mindestens einem der Ansprüche 1 bis 8, **dadurch gekennzeichnet, dass** das erste Profileinzelteil (2) und das zweite Profileinzelteil (3) an ihren Fügeflächen (10, 15), die im zusammengefügten Zustand einander zugewandt sind, komplementäre Strukturen (11, 12, 13, 16, 17, 18) zum Klemmen der Abdeckplane (25, 26) aufweisen, welche vorzugsweise im Querschnitt eine Mehrzahl von winkelmäßigen Änderungen ihrer jeweiligen Verlaufsrichtung aufweisen.

**10.** Strebe (1) nach Anspruch 9, **dadurch gekennzeichnet, dass** das erste Profieinzelteil (2) und/oder das zweite Profileinzelteil (3) an der Fügefläche (10, 15) eine Rändelung aufweist.

**11.** Strebe (1) nach mindestens einem der Ansprüche 1 bis 10, **dadurch gekennzeichnet, dass** das erste Profileinzelteil (2) und/oder das zweite Profileinzelteil (3) an wenigstens einem Ende als Hohlprofilteil ausgebildet ist und dass ein Endstück (28, 29, 32, 39) zum insbesondere gemeinsamen Verschließen des Profileinzelteils bzw. der Profileinzelteile vorgesehen ist, insbesondere durch Einstecken in das Profileinzelteil bzw. in die Profileinzelteile, wobei das Endstück (28, 29, 32, 39) vorzugsweise eine Struktur (35), insbesondere eine Kantstabstruktur, zum Verbinden mit einer Antriebseinheit für die Abdeckung aufweist.

**11.** Strebe (1) nach Anspruch 11, **dadurch gekennzeichnet, dass** das Endstück (28, 29, 32, 39) und vorzugsweise weiterhin eine Auflagefläche (41) zum Auflegen auf einen Rand (R) der Öffnung oder Vertiefung, insbesondere des Schwimmbeckens, aufweist.

**12.** Strebe (1) nach mindestens einem der Ansprüche 1 bis 11, **dadurch gekennzeichnet, dass** das zweite Profileinzelteil (3) an seiner Außenfläche bezogen auf den zusammengefügten Zustand wenigstens eine Befestigungsstruktur (23, 24), insbesondere eine hinterschnittene Längsausnehmung aufweist, an der ein Randauflageteil (31) befestigt bzw. befestigbar ist.

**13.** Strebe (1) nach mindestens einem der Ansprüche 1 bis 12, **dadurch gekennzeichnet, dass** die Strebe (1) in Aluminium oder einem vergleichbaren Werkstoff ausgebildet ist.

**14.** Abdeckung mit einer Abdeckplane (25, 26), insbesondere einer textilen Kunststofffolie, **gekennzeichnet durch** wenigstens eine Strebe (1) nach mindestens einem der Ansprüche 1 bis 13 zum Tragen der Abdeckplane (25, 26) über einer Öffnung oder Vertiefung, insbesondere über dem wassergefüllten Bereich (27) eines Schwimmbeckens.

**15.** Abdeckung nach Anspruch 14, **gekennzeichnet durch** eine vorzugsweise regelmäßige Abfolge von Abdeckplanenbahnen (25, 26) und Streben (1), wobei die Breite der Abdeckplanenbahnen (25, 26) gegebenenfalls mit Ausnahme des Abdeckplanenrandes insbesondere ca. 1,3 m beträgt.
